# EUROPEAN PATENT SPECIFICATION

(11) **EP 0 723 071 B1**
(45) Date of publication and mention of the grant of the patent: **19.04.2000**
(21) Application number: 95100920.8
(22) Date of filing: 24.01.1995
(51) Int. Cl.: F02B 23/08, F02F 1/42

(54) **Internal combustion engine**
Brennkraftmaschine
Moteur à combustion interne

(43) Date of publication of application: 24.07.1996
(73) Proprietor: YAMAHA HATSUDOKI KABUSHIKI KAISHA, Iwata-shi Shizuoka-ken (JP)
(72) Inventor: Masaaki, Yoshikawa, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- EP-A- 0 344 598
- EP-A- 0 542 264
- EP-A- 0 595 316
- EP-A- 0 611 883
- US-A- 4 995 359
- PATENT ABSTRACTS OF JAPAN vol. 11, no. 14 (M-553) 14 January 1987 & JP-A-61 190 147 (TOYOTA) 23 August 1986

## Description

The present invention relates to an internal combustion engine comprising a cylinder block having at least one cylinder bore, a piston accommodated in said cylinder bore so as to allow reciprocating motion, a cylinder head affixed to said cylinder block and enclosing said cylinder bore, said piston and said cylinder head each having a combustion chamber surface together defining a combustion chamber, and an intake passage arrangement and an exhaust passage arrangement having three intake valves and two exhaust valves for a combustion chamber, wherein the combustion chamber surfaces of the cylinder head and the piston are shaped substantially concave so as to define a lens shaped combustion chamber when the piston is at its top dead centre position, wherein the combustion chamber surface of the piston has a central concave area defining in part said lens shaped combustion chamber and an annular flat portion adjacent to said central concave area, whereby first squish areas are formed by an outer peripheral portion of the combustion chamber surface of the cylinder head between the cylinder bore surface and said intake valves and partly extending between a centre intake valve and the respective side intake valves.

The use of multiple intake valves for internal combustion engines is well known as an expedient for improving engine performance. Although four valves per cylinder engines (using two intake valves per cylinder) are common, there is an advantage to employing three intake valves and two exhaust valves for a total of five valves per cylinder. However, when five valves per cylinder are employed it is difficult to maintain low combustion chamber surface areas and high compression ratios. The reason for this is that the valve placement and the requirement to clear the head of the piston and permit adequate valve opening give rise to difficulties in obtaining the low combustion chamber surfaces and volumes necessary to achieve high performance and high compression ratios. As is disclosed in my United States Letters Patent 4,660,529 entitled 4-CYCLE ENGINE, issued April 28, 1987 and now reissued as RE 33787 on January 7, 1992, it is possible through placement of the intake valves as generally disclosed in that patent to obtain high compression ratios and still utilize five valves per cylinder.

When using multiple valves it is the common practice to provide a pair of valves serving related ports that are disposed on one side of a plane containing the axis of the cylinder bore and wherein the valves reciprocate about reciprocal axes that are disposed at an acute angle to this plane. In order to increase the amount of valve lift without decreasing the compression ratio it has also been the practice to incline the valve stems and associated ports to a plane that is perpendicular to the first-mentioned plane and which also passes through the cylinder bore axis. The valves are disposed at opposite acute angles to this plane. As a result of this construction, when the valves serve the intake function, the flow which enters the chamber through the individual valves will tend to intersect in the cylinder bore. This has certain disadvantages. Specifically, it is not always possible to provide the desired flow pattern in the cylinder bore and interfering turbulence may occur.

The use of two intake valves disposed as in the preceding paragraph is also used in combination with engines having three intake valves per cylinder. The two valves having the disposition disclosed form side intake valves and a center intake valve is disposed between these two side intake valves and closer to the outer periphery of the cylinder bore on the side opposite the first plane. Again, this can result in undesired air flow in the combustion chamber and particularly turbulence or interference in the air flows from the individual intake passages.

When multiple valves are employed per cylinder in an engine, the construction of the cylinder head and valve actuating mechanism tends to become rather complicated. This can give rise to other problems such as problems in correctly locating the fastening hold-down bolts for the cylinder head.

That is, it is desirable to provide substantially uniform spacing around the cylinder bore for the cylinder head hold-down bolts and with multiple valve arrangements this can be at time difficult.

The valves are normally operated by one or, more frequently, two overhead mounted camshafts. These camshafts may be journaled directly in the cylinder head or in components which form a portion of the cylinder head assembly. This requires a provision of additional bearing caps for journaling the camshaft and at times the bearing arrangement and hold-down fasteners for the bearing caps can interfere with or obscure the hold-down bolts for the cylinder head itself.

Because of the problems mentioned in connection with the complexity of multiple valve overhead valve cylinder heads, it has been at times the practice to employ a cylinder assembly that is made up of a number of castings that are secured to each other. Of course, as the number of pieces increases, the bolting arrangement, machine and cost of the cylinder head can become larger.

An example for a five-cylinder combustion engine of the kind mentioned above is disclosed in the European Patent Application 0 611 883 A1.

Further test with internal combustion engines having five valves per each combustion chamber have shown that the problem of a tendency towards knocking, especially during high speeds, still remains, even if first squish areas are supplied within said combustion chamber, as shown in EP 0 611 883 A1, mainly because of the increased compression ratio.

Accordingly, it is an objective of the present invention to provide an improved internal combustion engine, particularly having an improved combustion chamber configuration that reduces the tendency towards knocking together with a further increase of the compression ratio.

According to the present invention, this objective is solved in an inventive manner for an internal combustion engine as indicated above in that:

A separate second squish area is formed by a peripheral edge portion of the combustion chamber surface of the cylinder head adjacent to the cylinder bore surface between said exhaust valves on a cylinder side opposite to said first squish areas, and that the piston is provided with a plurality of recesses formed in its combustion chamber surface, whereby a large recess opposes the head portion of the center intake valve, a pair of two shallower recesses oppose the head portions of said adjacent side intake valves and two even smaller recesses oppose the head portions of said two exhaust valves for clearing a space for said valves and additionally balancing both squish flows from the intake side and the exhaust side.

Actually, it is known from EP 0 334 598 A2 for four-valve engines to provide the piston top with recesses located opposite to said valve head portions in order to avoid interference between said valves and said piston top side.

However, this knowledge cannot be simply transferred to five-valve engines, since their construction does not allow a symmetrical gas flow as four valve engines do.

Concerning the invention, since the second squish area, which is located between the exhaust valve openings, is much smaller in size than the first squish areas, which are located opposite thereto between the intake valve openings within the cylinder head, the gas flow and the turbulence caused by these squish areas are not balanced and, therefore, the turbulence does not occur equally within the entire combustion chamber. While the recesses corresponding to the side intake valves, and the recesses corresponding to the exhaust gas valves, do not have any direct relation to the squish areas and are mainly constructed to avoid an interference between the valves and the piston top, the large recess has a different objective: the valve head of the center intake valve is closer to the upper surface of the piston than the valve face of the side intake valves. Therefore, if an extremely large recess would not be provided, the area between the center intake valve and the piston top would function as an additional squish area extremely influencing the gas flow into an undesired manner. This, however, would increase the knocking tendency. However, by applying such a large recess into the piston top, the respective part of a squish area on the intake side of the combustion engine is greatly reduced. As a consequence thereof the gas flows between the intake side and the exhaust side are now in balance because the corresponding squish areas are adapted to each other. Knocking tendency is thereby greatly reduced, even if the compression ratio is further increased.

Further preferred embodiments of the present invention are laid down in further dependent claims.

Hereinafter, the present invention is illustrated and explained in greater detail by means of preferred embodiments thereof in conjunction with accompanying drawings, wherein:
Figure 1 is a cross-sectional view taken through a portion of an internal combustion engine constructed in accordance with a first embodiment of the invention along the line 1-1 of Figure 3 generally vertical to the axis of rotation of the engine crankshaft);
Figure 2 is a cross-sectional view taken along a plane perpendicular to the plane of Figure 1;
Figure 3 is a top-plan view of the cylinder head with the camshafts, tappets, valves and other components removed so as to more clearly show the construction;
Figure 4 is a bottom-plan view of the cylinder head showing the valve placement with the ports being illustrated in phantom.
Figure 5 is an enlarged top plan view showing the configuration of the head of the piston.
Figure 6 is a view showing the configuration of the inlet opening of the intake passages and is taken generally in the direction of the arrow 6 in Figure 1 and 9,
Figure 7 is a view, in part similar to Figure 6, and shows another alternative configuration for the inlet opening for the intake passages.
Figure 8 is a bottom plan view of the cylinder head showing the valve placement with the associated ports,
Figure 9 is a cross-sectional view, similar to figure 1, taken through a portion of an internal combustion engine constructed in accordance with another embodiment of the present invention,
Figure 10 is an enlarged cross-sectional view taken through a piston of the internal combustion engine according to figure 9,
Figure 11 is a top plan view showing the configuration of the head of the piston of figure 10,
Figure 12 is a partially schematic, cross-sectional view taken through a portion of an internal combustion engine constructed and operated in accordance with a further embodiment of the invention,
Figure 13 is an enlarged top plan view, with portions broken away, showing the valve timing mechanism of the embodiment of figure 12,
Figure 14 is a timing diagram showing the respective timing of the opening and closing of the intake and exhaust valves under minimum overlap condition,
Figure 15 is a timing diagram similar to figure 14 showing the respective timing of the opening and closing of the intake and exhaust valves under medium overlap condition,
Figure 16 is a timing diagram similar to figures 14 and 15 showing the respective timing of the opening and closing of the intake and exhaust valves under maximum overlap condition,
Figure 17 is a map showing the timing retardation of the intake valve relative to engine speed and engine load or output in the term of BMEP in accordance with a control routine of the embodiment of figure 12,
Figure 18 is a block diagram showing how the timing control is effected in accordance with the embodiment of figure 12,
Figure 19 is a partially schematic, partial cross-sectional view, in part similar to figure 12, and shows another embodiment of the invention,
Figure 20 is a diagrammatic view showing the control routine of the embodiment shown in figure 19,
Figure 21 is a perspective view of a camshaft drive constructed in accordance with yet another embodiment of the invention.

Referring now in detail to the drawings an internal combustion engine constructed in accordance with an embodiment of the invention is shown partially in the figures and as identified generally by the reference numeral 11. The invention is described by reference to a single cylinder of the engine 11, and it will be readily apparent to those skilled in the art how the invention can be practiced with multiple cylinder engines of varying configurations (i.e., in-line, v-type, etc). Also since the invention deals primarily with the combustion chamber and the induction and valving system associated with the cylinder head, only the upper portion of the engine 11 has been depicted. Where components of the engine are not illustrated or described, they may be considered to be conventional.

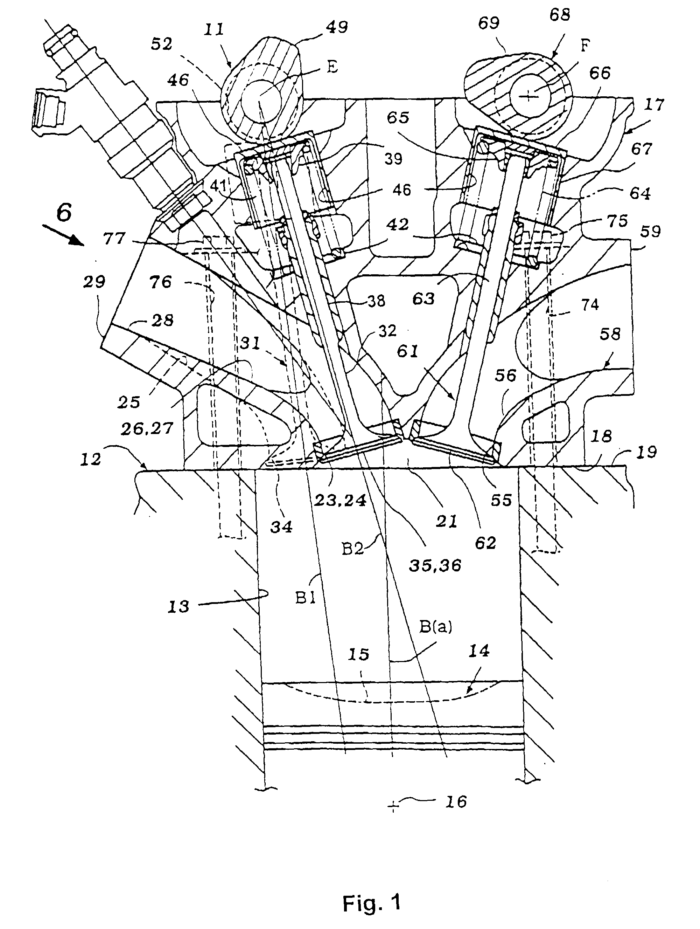

The engine 11 includes a cylinder block 12 which may be formed any suitable material and which has a cylinder bore 13 formed therein. The cylinder bore 13 slidably receives a piston 14 which has a recessed bowl 15 formed in its upper end. Said recessed bowl 15 has substantially the shape of a segment of a sphere with a flattened bottom portion in the center of said bowl and said piston, respectively, as can be seen in figure 1. Thus, the piston forms in part a combustion chamber, as will be described, which at top dead center has the shape of an optical lens (lens shaped).

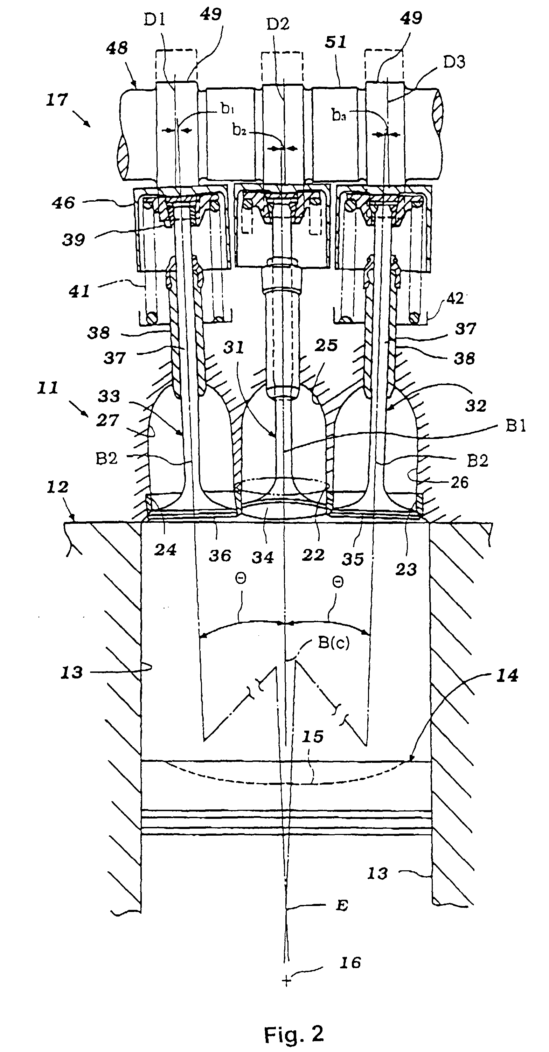

The piston 14 is connected to a crankshaft (not shown) which is supported for rotation in a well-known manner within a crankcase chamber formed at the end of the cylinder block 12 and which rotates about a rotational axis 16. The location of the rotational axis 16 is somewhat foreshortened in Figures 1 and 2 so as to represent a principle of the invention, as will be described.

The engine 11 is water cooled and for this purpose the cylinder block 12 is provided with a cooling jacket (not shown) through which liquid coolant is circulated in a well-known manner.

A cylinder head, indicated generally by the reference numeral 17 is affixed, in a manner to be described, to the cylinder block 12. This cylinder head 17 has a lower sealing surface 18 which is sealingly engaged with a cylinder head gasket (not shown) interposed between the cylinder head surface 18 and an upper deck surface 19 of the cylinder block 12. The cylinder head lower surface is formed with a recess 21 which is bounded by the sealing surface 18 and which cooperates with the head of the piston 14 and cylinder bore 13 to form the combustion chamber of the engine, the volume of which varies cyclicly as the piston 14 reciprocates in the cylinder bore 13. Said recess 21 formed in the cylinder head lower surface has substantially the shape of a segment of a sphere, similar to the concave bowl formed in the piston 14. Thus, the recess 21 and bowl 15 of the piston form a lens shape when the piston is at top dead center. This shape of combustion chamber reduces knock sensitivity.

The cylinder bore 13 has an axis B and this axis lies on a plane A which extends perpendicularly to the plane of Figure 1 and which generally divides the cylinder head 11 into an intake side shown on the left hand side of Figure 1 and an exhaust side shown on the right hand side of Figure 1. The axis of rotation 15 of the crankshaft also lies on this plane. Three intake valves seats comprised of a center valve seat 22 and a pair of side valve seats 23 and 24 are affixed to the cylinder head 17 in the combustion chamber recess 21 in an appropriate manner, as by pressing inserts into place. These valve seats 22, 23 and 24 are formed at the termination of intake passages 25, 26 and 27, respectively, which are formed in the cylinder head 17 on its inlet side. These passages merge into a common intake port 28 formed in an external surface 29 of the cylinder head 17. In the embodiment the opening of the intake port in the surface 29 is oval, but as will be described other shapes are possible.An appropriate air charge and fuel charge, if desired, is supplied to the intake passages 25, 26 and 27 from an induction system (not shown). This induction system may be of any known type.

Three poppet-type intake valves comprised of a center intake valve 31 and a pair of side intake valves 32 and 33 cooperate with the valve seats 22, 23 and 24 so as to control the flow through them. These poppet-type valves 31, 32 and 33 have head portions 34, 35 and 36, respectively, that cooperate with the valve seats 22, 23 and 24 in a well-known manner.

Each poppet-type valve 34, 35 and 36 has a stem portion 37 that is supported for reciprocation within the cylinder head 17 by a pressed or cast in valve guide 38. The upper ends of the stems 37 have affixed to them keeper retainer assemblies 39 so as to retain one end of a coil spring assembly 41 in engagement with the valve stems 37. The opposite ends of the springs 41 bear against machine surfaces 42 of the cylinder head 17 so as to urge the intake valves 31, 32 and 33 to their closed position, as is well known in this art.

It should be noted that the reciprocal axis B-1 of the center intake valve 31 lies substantially at an acute angle to the plane A containing the cylinder bore axis B and substantially on a plane C perpendicular to the plane A and also containing the cylinder bore axis B. Thus, this center intake valve 31 is in fact on the center of the periphery of the cylinder bore 13 but spaced inwardly therefrom, for a reason to be described.

The side intake valves 32 and 33 have their axes of reciprocation B-2 lying in a common plane that is disposed at a greater acute angle to the plane B-A containing the cylinder bore axis B. These axes are disposed on opposite sides of the plane C. The axes B-2 are also disposed at acute angles θ to the plane C containing the cylinder bore axis B so that they intersect at a point E which is disposed below the head portion 15 of the piston 14 when in its bottom dead center position as shown in the figures and displaced toward the crankshaft axis 16.

This means that the intake charge which enters the combustion chamber from the respective intake passages 26 and 27 will not intersect with each other. As a result, this charge may be directed into the combustion chamber so as to create a slight tumble action. If it is desired to augment this tumble action there may be provided a tumble control valve of any of the types shown in the US Patent 5,359,972 of Yoshiharo Isaka, entitled "Tumble Control Valve for Intake Bore," and assigned to the assignee hereof. Alternatively, other types of tumble control valves may be employed for this purposed.

It should be noted that the intake passages 25, 26 and 27 have a downwardly inclined portion which intersects a curved portion which has its respective axis aligned with the respective axes B-1 and B-2 of the valve stems 37 of the respective valves 31, 32 and 33. In one specific preferred embodiment of the invention, the angle θ is approximately 2° (two degrees), but the choice of this angle will depend upon the other geometric relationships of the engine so as to ensure that the point E falls below the bottom dead center position of the piston toward the axis of the rotation 16 of the crankshaft so as to achieve the aforenoted result.

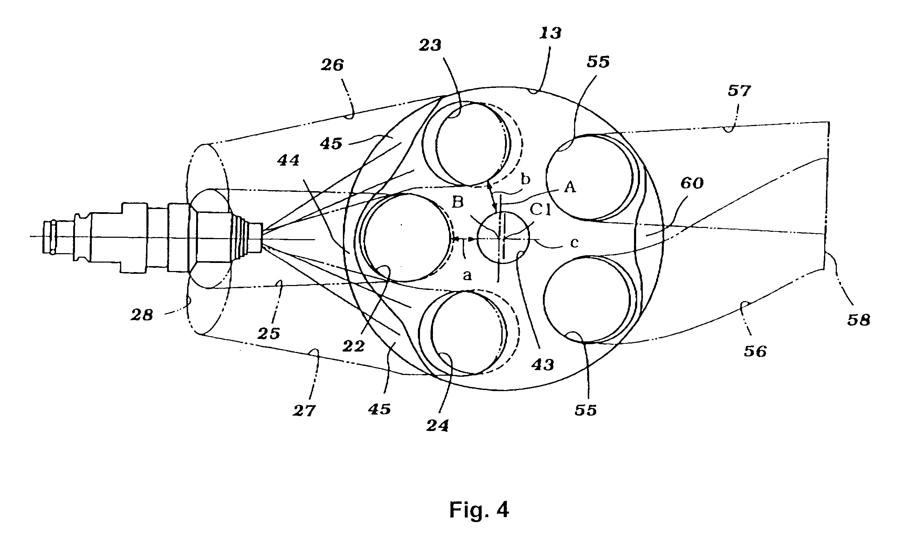

As As may be seen from Figure 4, the center intake valve seat 22 is at a lesser distance a to a spark plug receiving aperture 43 formed centrally in the combustion chamber with its axis c-1 being disposed slightly offset on the plane C from the cylinder bore axis B than the corresponding distance b from the side intake valve seats 23 and 24. This permits a squish area 44 to be formed in the outer periphery of the cylinder head allowing large squish areas 45 to be formed on the sides between the center intake valve 22 and the side intake valves 23 and 24 so as to promote a greater squish action and improve turbulence for improving low speed running and combustion. This offsetting of the center intake valve toward the cylinder bore axis B also permits, in addition to the squish action, a reduced combustion chamber volume and, accordingly, a higher combustion ratio.

Thimble-type tappets 46 are slidably supported within bores 47 formed integrally in the cylinder head 17 and with their axes extending generally parallel to the axes of the respective stems 37 of the intake valves 31, 32 and 33. Because the side intake valves 32 and 33 are skewed relative to the plane C, these bores 47 may be spaced from each other without intersecting each other. This also easily permits these bores to be formed in the cylinder head 17 rather than in a separate cam carrier member which is fixed to the cylinder head 17 thus simplifying the machine operation for the cylinder head.

An intake camshaft 48 is rotatably journaled about an axis E within the cylinder head 17 in a manner to be described and has cam lobes 49 that cooperate with the thimble tappets 47 for operating them and the intake valves 31, 32 and 33 in a well-known manner. It should be noted that the common plane containing the axes B-2 of the side intake valves 32 and 33 and a plane containing the axis B-1 of reciprocation of the center intake valve 31 intersect at the point E which is coincident to the axis of rotation of the intake camshaft 48. Also it should be noted that this point E is disposed inwardly from the periphery of the cylinder bore 13 as viewed in Figure 1. The advantages of this construction will be described later. The intake camshaft 48 is driven at ½ crankshaft speed from the crankshaft by any suitable mechanism which may include a variable timing arrangement as disclosed in my co-pending publication entitled VARIABLE VALVE TIMING ARRANGEMENT FOR INTERNAL COMBUSTION ENGINE, Serial No. 08/138034, filed October15, 1993.

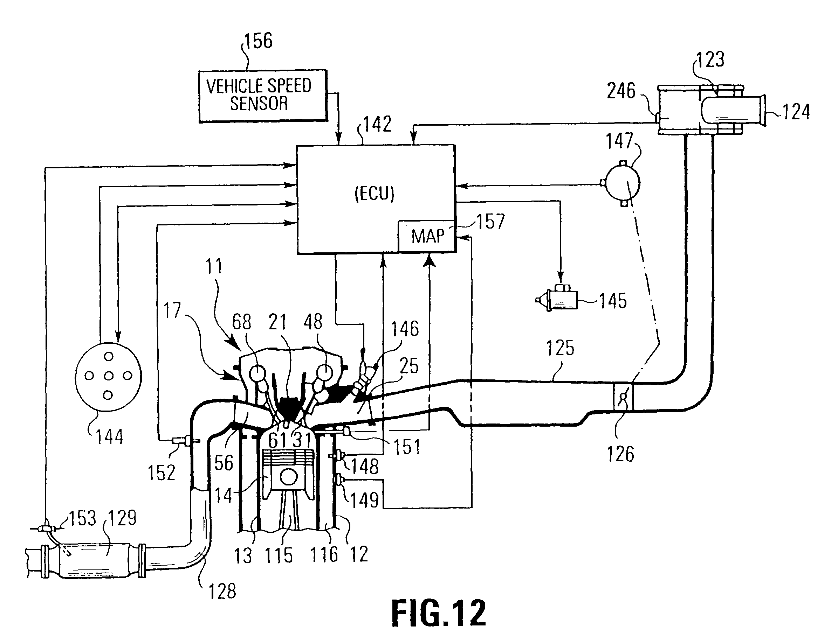

As described in connection with the embodiment according to figure 12, the control strategy for varying the intake valve timing may be altered from the optimum for a given running condition in response to the sensing of a knock or an incipient knocking condition so as to further improve the knock free running of the engine. As has been previously noted, the configuration of the combustion chamber, the intake porting and the tumble action achieved, all lend themselves to an engine that has low tendency to knock. This performance can be further improved by using the variable valve timing arrangement as described in my co-pending publication Serial No. 138034.

Even though the axis B-1 of the center intake valve 31 lies on the plane C, the cam lobe 49 associated with it has its center D-2 offset to one side by the dimension b-2 with this offset being toward the intake valve 32 as seen in Figure 2. This slight offset gives a rotational effect to the tappet 46 which will cause it to rotate and minimize wear both on the tappet 46 and also on the cylinder head bore 47 and the intake valve 31.

Because the heads of the tappets 46 associated with the side intake valves 32 and 33 are at a small angle, the cam lobes 49 associated with the side valve operating tappets may be slightly tapered so as to minimize wear. In addition, the centers of these lobes D-1 and D-3 are offset to the distances b-1 and b-3 from the centers of the tappets 46 so as to cause a rotational effect on these tappets for the same reason.

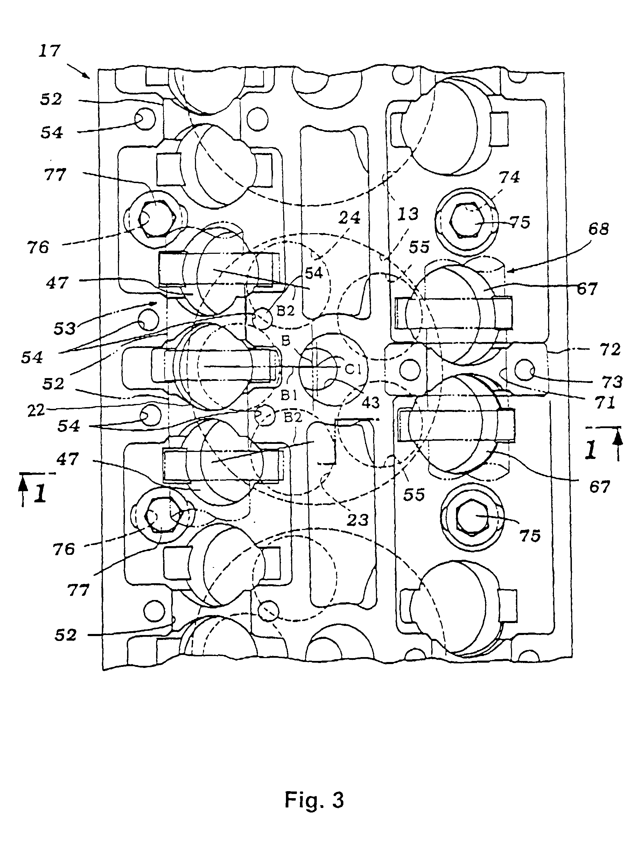

The intake camshaft 48 is provided with a pair of bearing surfaces 51 that are disposed between the lobe 49 for operating the center intake valve 31 and the lobes 49 that operate the side intake valve 32 and 33, respectively. These bearing surfaces are journaled within respective bearing surfaces 52 machined directly in the upper surface of the cylinder head 17. Bearing caps shown in phantom in Figure 3 and identified by the reference 53 are affixed to the cylinder head 17 by means of threaded fasteners which pass through holes 54 formed in the cylinder head 17 at locations disposed between the cam lobes 49. Again, these bearing surfaces 52 may be formed directly in the cylinder head 17, and thus avoid the separate cam carrier construction used with other types of five-valve-per-cylinder engines.

A pair of exhaust valve seats 55 are pressed into the cylinder head 17 on the side of the plane A opposite to the intake side. It should be noted that the valve seats 55 are offset from the plane A containing the cylinder bore axis B while this plane slightly intersects the intake valve seats 23 and 24. This offsetting tends to permit a higher compression ratio and a reduced combustion chamber volume so that there will be less surface quenching. The exhaust valve seats 55 are formed at the end of respective exhaust passages 56 and 57 formed in this side of the cylinder head and which are siamesed and form a common exhaust outlet opening 58 in an outer surface 59 of the cylinder head 17.

It will be seen that the exhaust valve seats 55 provide between them and the outer periphery of the cylinder-bore 13 a further squish area 60 which is disposed opposite the squish areas 44 and 45 on the intake side but is disposed so that the squish effect will not be in direct opposition to the main squish action caused by the areas 44 and 45 so as to further improve the turbulence in the combustion chamber and flame propagation.

Poppet-type exhaust valves 61 have head portions 62 that cooperate with the valve seats 55 for opening and closing them. These exhaust valves have stem portions 63 that are supported within valve guides 38 pressed or otherwise fixed to the cylinder head assembly 17 and which define the reciprocal axes for the exhaust valve 61. These axes lie in a common plane that is disposed at acute angles to the plane A containing the cylinder bore axis B and which acute angle is less than the acute angle of the side intake valve 32 and 33 and greater than the center intake valve 31.

Coil compression springs 64 encircle the exhaust valve stems 63 and bear against keeper retainer assemblies 65 and cylinder head machine surfaces 42 for urging the exhaust valves 61 to their closed positions.

Thimble-type tappets 66 are slidably supported within bores 67 formed directly in the cylinder head 17 and are associated with the exhaust valves 61 for opening them. These thimble tappets 66 are operated by an exhaust camshaft 68 that is rotatable about an axis F which is parallel to the axis E of the intake camshaft 48 but which is spaced a greater distance from the cylinder bore axis B than the axis E. Cam lobe 69 on the camshaft 68 engage the thimble tappets 66 for operating them in a well-known manner.

The exhaust camshaft 68 is driven in a known manner and is provided with bearing surfaces disposed between the cam lobes 69 that are rotatably journaled within a bearing surface 71 machined in the cylinder head 17. Bearing caps are held to these bearing surfaces 71 as indicated in broken lines at 72 in Figure 3 by means of threaded fasteners which pass through openings 73 formed in the cylinder head 17.

It has been noted that the cylinder head 17 is affixed to the cylinder block 12 and the way in which this is done will now be described by primary reference to Figures 1 and 3. It will be seen that a pair of holes 74 are formed in the cylinder head 17 under the exhaust camshaft 68 on the exhaust side of the engine and these receive threaded fasteners 75 for cylinder head hold down purposes. In a similar manner, a pair of hold-down openings 76 are formed on the intake side of the cylinder head and these holes 76 are disposed at the same distance from the cylinder bore axis B as the hole 74 on the exhaust side. This is possible since the intake camshaft axis E is disposed inwardly thereof and hence threaded fasteners 77 may be freely inserted into the hole 76 for hold-down purposes without necessitating removal of the intake camshaft 48 and while maintaining uniform spacing. It should be noted that the hold-down hole 76 are basically aligned with and are at the same distance from the plane A as the bearing cap hole 54 so as to facilitate machining.

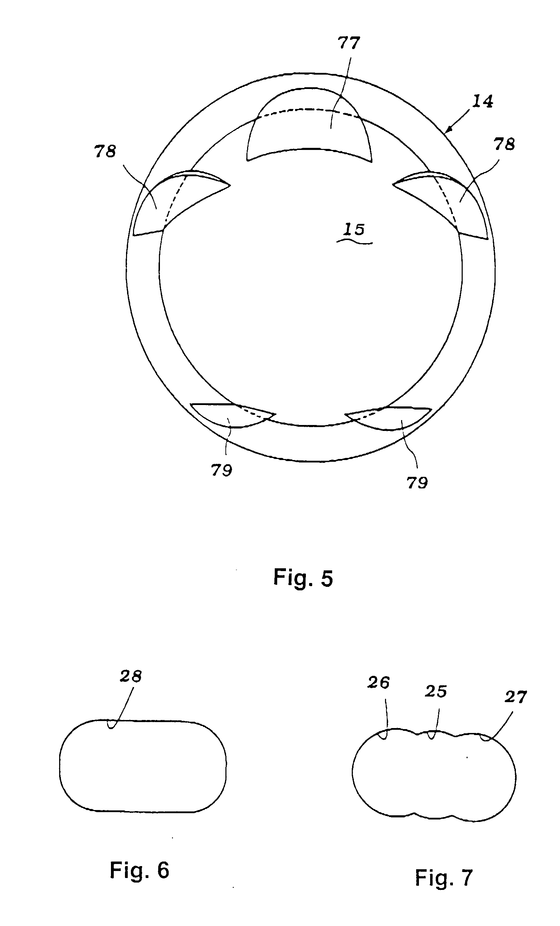

In order to permit the high compression ratio of the engine and still permit maximum valve lifts, the head of the piston 14 is provided with a plurality of recesses as shown in Figure 5 so as to clear the respective valves. These recesses include a relatively large recess 77 for clearing the center intake valve 34 and a pair of shallower recesses 78 for clearing the heads of the side intake valves 35 and 36. In a similar manner, the opposite side of the piston head is provided with a pair of recesses 79 so as to clear the exhaust valves 62. These recesses 77, 78 and 79 extend in part into the bowl area 15.

As can be seen from figure 4, the internal combustion engine is provided with an injection device having an injection valve disposed in the cylinder head 17. Preferably, said injection valve is adapted to spray fuel directly into the intake passages 25, 26 and 27 towards the respective valves.

Alternatively, the injection valve may be adapted to spray towards only one valve, either towards the center intake valve or towards one of the side intake valves.

In the embodiment as thus far described the opening through the cylinder head surface 29 of the intake port 28 has been oval in configuration. Figure 7 shows-another embodiment wherein the opening has a more curvilinear shape so as to correspond with the general configuration of the passage portions 25, 26 and 27 as shown in this figure.

It should be readily apparent from the foregoing description that the described construction permits a compact combustion chamber for achieving a high compression ratio without knocking and very effective induction system and cylinder head arrangement for a multiple valve engine. Knocking can also be avoided or reduced through the use of variable intake valve timing. This can be done through the use of a single cylinder head casting without requiring multi-piece construction and permits the positioning of the induction system so that the desired flow pattern can be achieved in the combustion chamber under all running conditions without interfering or intersecting flows from the various intake passages. Of course, this action may also be augmented under some running conditions by a tumble valve arrangement as described.

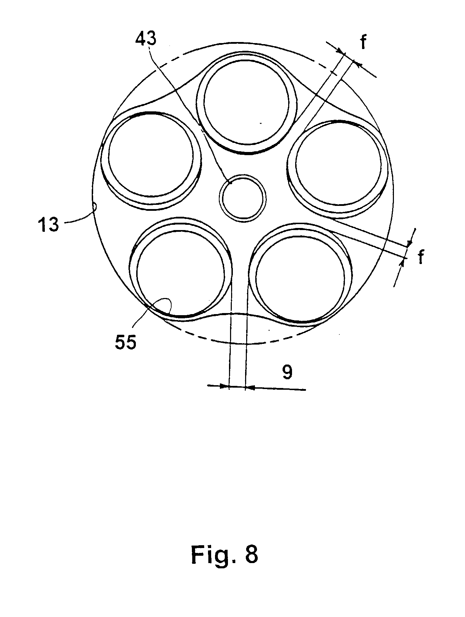

Figure 8 shows the configuration and the arrangement of the intake and exhaust valves and the intake and exhaust ports, respectively, in greater detail. As can be seen, the distance g is greater than the distance f between the center intake valve and the two side intake valves. This permits a large squish area 60 to be formed by a peripheral edge portion of the cylinder head adjacent to the cylinder bore surface between said exhaust valves. Furthermore, the distance f between the side intake valves and the exhaust valves is substantially the same as the distance f between the center intake valve and the side intake valves.

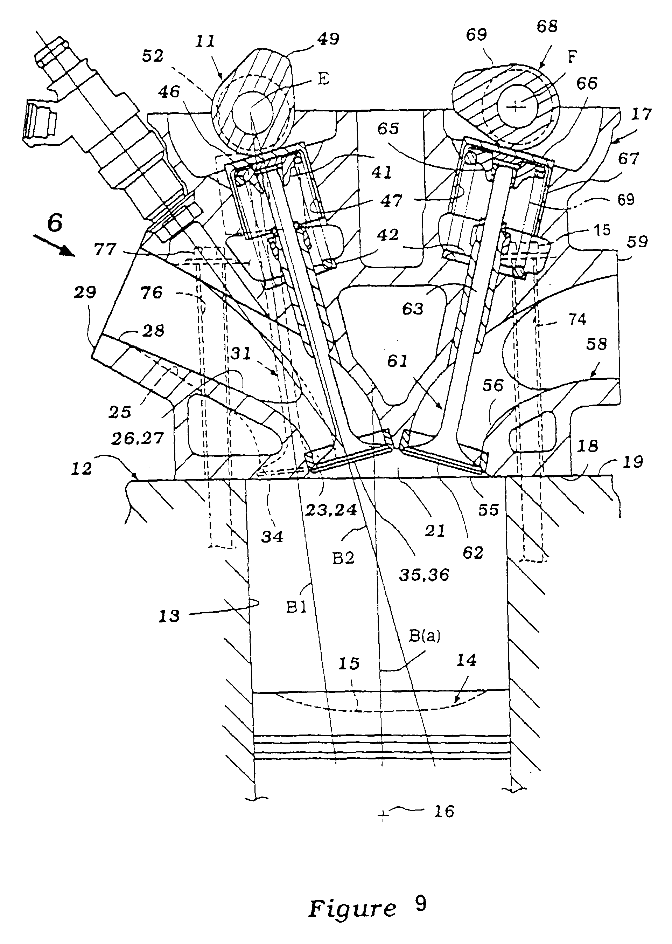

Another embodiment of the present invention will hereinafter be described with reference to figures 9 to 11.

The internal combustion engine according to this embodiment has substantially the same cylinder head configuration as the embodiment described with reference to figure 1. Accordingly, the parts and portions of the cylinder head assembly which correspond with the respective parts and portions of the cylinder head 17 of the embodiment according to figure 1 are indicated by the same reference numerals.

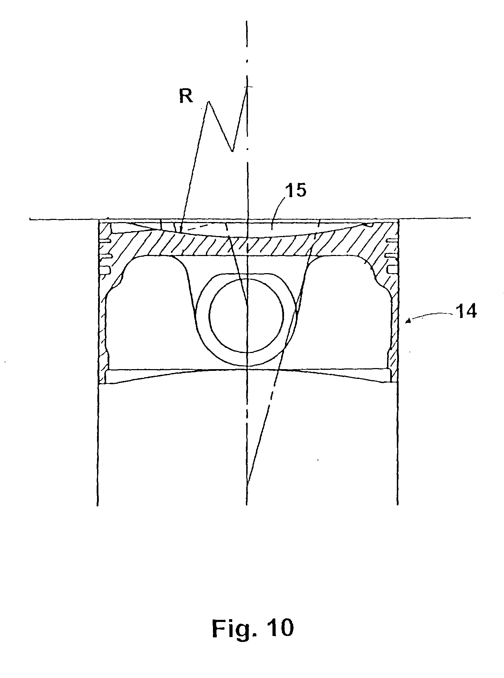

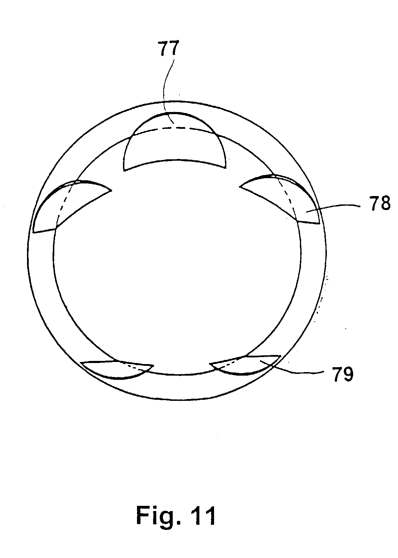

The combustion chamber configuration of this embodiment slightly differs from the afore-described embodiments, as the recessed bowl 15 formed in the combustion chamber surface of the piston 14 has the shape of a segment of a sphere of a radius R, but does not have the flattened bottom portion in the center of the piston. As can be seen from figure 10, the combustion chamber surface of the piston 14 has the central concave area 15 having the shape of the segment of a sphere of radius R and an annular flat portion adjacent to and enclosing said central concave area 15, said annular flat portion forming said squish areas together with the respective portions of the cylinder head lower surface. As shown in figure 11, the combustion chamber surface of the piston 14 is provided with a plurality of recesses 77, 78, 79 so as to clear the respective valves in order to permit the high compression ratio of the engine and still permit maximum valve lifts. Said recesses include a relatively large recess 77 for clearing the center intake valve 34 and a pair of shallower recesses 78 for clearing the heads of the side intake valves 35 and 36. Accordingly, the pair of recesses 79 are associated with the exhaust valves 62. These recesses 77, 78 and 79 extend in part into the bowl area 15.

In the following, further preferred embodiments of an internal combustion engine constructed and operated in accordance with the invention will be described with reference to figures 12 to 21.

As these embodiments mainly concern the valve timing arrangement of said engine, for further reducing the likelihood of knocking, the piston and cylinder head structure and combustion chamber configuration will not be described in great detail once again. However, it is to be noted that the combustion chamber configuration and the cylinder head structure, particularly the lens shape of the combustion chamber, of the following embodiments is substantially the same as described in connection with the embodiments of figures 1 to 11.

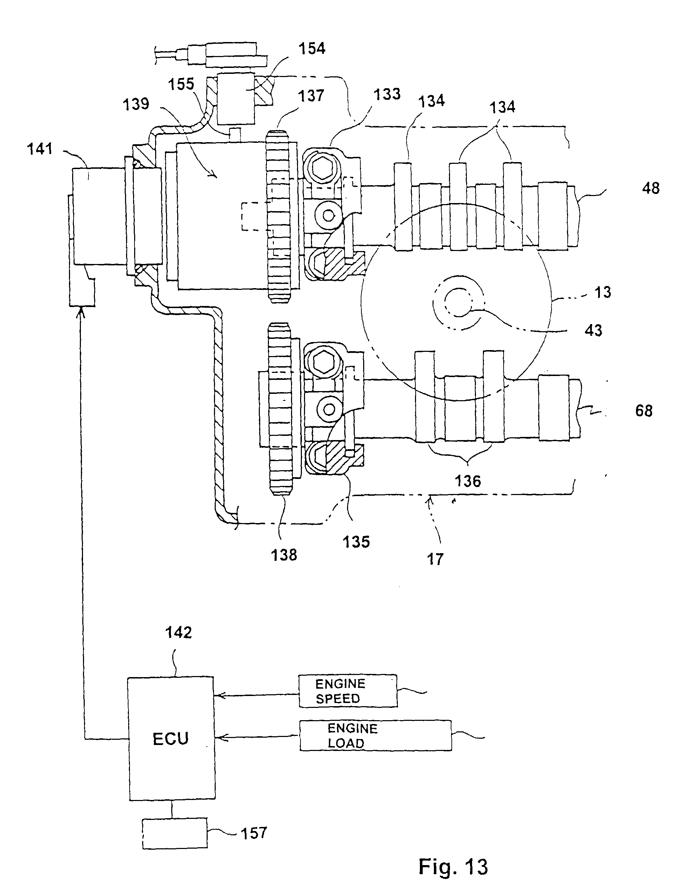

Referring now in detail initially to the embodiment of Figures 12 through 17 and initially to Figures 12 and 13 an internal combustion engine constructed and operated in accordance with an embodiment of the invention is identified generally by the reference numeral 11. The engine 11 is shown only partially and by way of a cross section through a single cylinder in Figure 12. The invention deals primarily with the camshaft and timing arrangement for the engine 11 and, except for this portion of the construction, the engine 11 may be considered to be of the above described type. Also, the engine 11 is depicted through only a single cylinder because it is believed to be readily apparent to those skilled in the art how the invention may be practiced with multiple cylinder engines. Also, the described embodiments relate to four cycle engines, but it will be apparent to those skilled in the art how the invention can also be practiced in conjunction with two cycle engines. The embodiment , however, has particular utility with four cycle engines because they are more easily adaptable to variable timing events, as will become apparent.

The engine 11 is comprised of a cylinder block 12 having one or more cylinder bores formed by liners 13. Pistons 14 are slideably supported in the cylinder bores and are connected by means of connecting rods 115 to drive a crankshaft (not shown in this embodiment) in a well known manner. In the illustrated embodiments, the engine 11 is water cooled and the cylinder block 12 is provided with a cooling jacket 116 through which water is circulated in a known manner. A cylinder head assembly 17 is affixed to the cylinder block 12 and is formed with a recess 21 which, in cooperation with the head of the piston 14 and the cylinder bore 13, forms the combustion chamber of the engine 11.

Also mounted within the cylinder head assembly 17 are three intake valves 31 for each cylinder and two exhaust valves 61 The intake valves 31 control the flow of an intake air charge into the combustion chambers from intake passages 25 formed in one side of the cylinder head assembly 17. An intake charge is delivered to the intake passages 25 by an induction system comprised of, an air cleaner silencer assembly 123 which draws atmospheric air through an air inlet 124 and delivers it to an intake manifold 125 in which a throttle valve 126 is provided for controlling the engine speed in a well known manner.

Exhaust passages 56 are formed in the side of the cylinder head 17 opposite the intake passages 25 and deliver the burnt charge from the combustion chambers past the exhaust valves 61 into an exhaust system, indicated generally by the reference numeral 128 and in which a muffler or catalytic convertor or both 129 is positioned so as to discharge the exhaust gases to the atmosphere.

The intake and exhaust valves 31 and b1 are operated by respective intake and exhaust camshafts 48 and 68 which are rotatably journalled in the cylinder head assembly 17 and which are driven in a manner as may be best understood by reference to Figure 13.

As may be seen in Figure 13 the intake camshaft 48 is journalled in the cylinder head assembly 17 by means of a plurality of spaced apart bearings133, only one of which appears in this figure. The intake camshaft 48 is provided with three cam lobes 134 which operate three intake valves 31 associated with each cylinder 13.

In a similar manner, the exhaust camshaft 68 is rotatably journalled in the cylinder head assembly 17 by means of a plurality of spaced bearings 135 only one of which appears in the drawings. Like the intake camshaft 48 the exhaust camshaft 68 has lobes 136 that operate with the exhaust valves 61 for effecting their operation. There are two exhaust valves per cylinder and hence there are two exhaust cam lobes 136 for each cylinder.

Intake and exhaust sprockets 137 and 138 are associated with the intake and exhaust camshafts 48 and 68 for driving them. A suitable chain (not shown) is entrained around the sprockets 137 and 138 and a sprocket formed on the crankshaft of the engine so that the sprockets 137 and 138 will be driven at one half of crankshaft speed. The exhaust camshaft sprocket 138 is directly affixed to the exhaust camshaft 68 while the intake sprocket 137 is connected to the intake camshaft 48 by a variable timing mechanism, indicated generally by the reference numeral139 The variable timing mechanism 139 is of any known type and is effective so as to change the phase angle between the sprocket 137 and the intake camshaft 48 for varying the timing of the opening and closing of the intake valves, as will be described. This variable timing mechanism 139 is controlled by a control, indicated generally by the reference numeral 141 and which receives a control signal from the ECU, indicated schematically at142 and shown in both Figures 12 and 13.

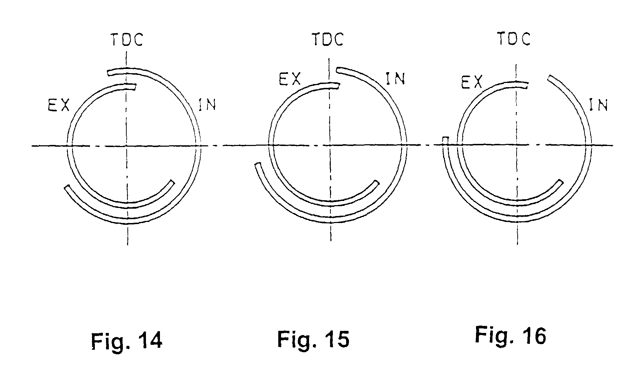

Figures 14 through 16 are timing diagrams which show the opening and closing of the intake and exhaust valves under three different conditions. Figure 14 shows the normal condition when operating at low speed, low output and wherein the timing of the intake valve opening is chosen so as to open 10° before top dead center and close approximately 60° after bottom dead center. The exhaust timing, is fixed and the exhaust valve opens approximately 60° before bottom dead center and closes approximately 5° to 10° after top dead center. As a result, there will be overlap between the opening of the exhaust valve and the closing of the intake valve.

Figure 15 shows a condition when the intake valve opening is retarded to a partial extent so that the intake valve now will open at approximately 5° after top dead center and close at approximately 75° after bottom dead center. The exhaust timing is not varied and it will be seen that there is a greater overlap between the opening of the exhaust valve and the closing of the intake valve under this condition.

Figure 16 shows the maximum intake valve retardation and also the maximum overlap between the opening of the exhaust valve and the closing of the intake valve for high speed performance. In this case, intake valve opening is retarded to about 15° after top dead center. The control strategy will be described later as to the control for the timing of the retardation of the opening of intake valves by the intake camshaft 48.

The engine 11 also includes a spark plug, shown at 43 in Figure 13 which is positioned in the cylinder head 17 centrally of the recess 21. The spark plug 43 is fired by means of an ignition system that includes a distributor 144 and one or more ignition coils 145 that supply a spark to the spark plugs 43 under the control of the ECU 142 under any suitable strategy.

In addition, the engine 11 is provided with a manifold injection system including manifold fuel injectors 146 which are also controlled by the ECU 142 and which spray into the cylinder head intake passages 25 in an amount and at a timing controlled by any suitable strategy.

A number of sensors are employed for the control of the engine 11 and as will be readily apparent to those skilled in the art, the number or types of sensors employed can vary depending upon the particular desired control strategy. As exemplary sensors shown in Figures 12 and 13 there is an intake air temperature sensor 246 that is mounted in the air inlet device 123 and which transmits its temperature signal to the ECU 142. In addition, there is a throttle position sensor 147 that is connected to the throttle valve 126 and which also outputs a signal to the ECU 142. Throttle valve position is indicative of engine speed and/or load and also intake air amount. Of course, intake air amount sensors of a known type may also be employed.

The engine cooling jacket 116 is provided with an engine coolant temperature sensor 148 which outputs its signal of engine operating temperature also to the ECU 142. A knock sensor 149 may be mounted in the cylinder block 12 or cylinder head 17 and also outputs a signal to the ECU 142 which is indicative of knocking conditions in the engine. A combustion chamber pressure sensor 151 is mounted in the cylinder head 17 and senses the actual pressure in the combustion chamber and outputs a signal to the ECU 142 indicative of this condition.

There is also provided an oxygen sensor 152 which is mounted in the exhaust system 128 and outputs a signal to the ECU 142 which will indicate the richness of the fuel/air mixture through the presence of oxygen in the exhaust gases. An exhaust temperature probe 153 may extend into the catalytic convertor 129 and also provide an exhaust temperature signal to the ECU 142. In addition, a sensor 154 may be mounted in the cylinder head 17 (Figure 13) and cooperate with a marker 155 on the VVT unit139 so as to provide an indication of camshaft position and/or crankshaft position as well as speed.

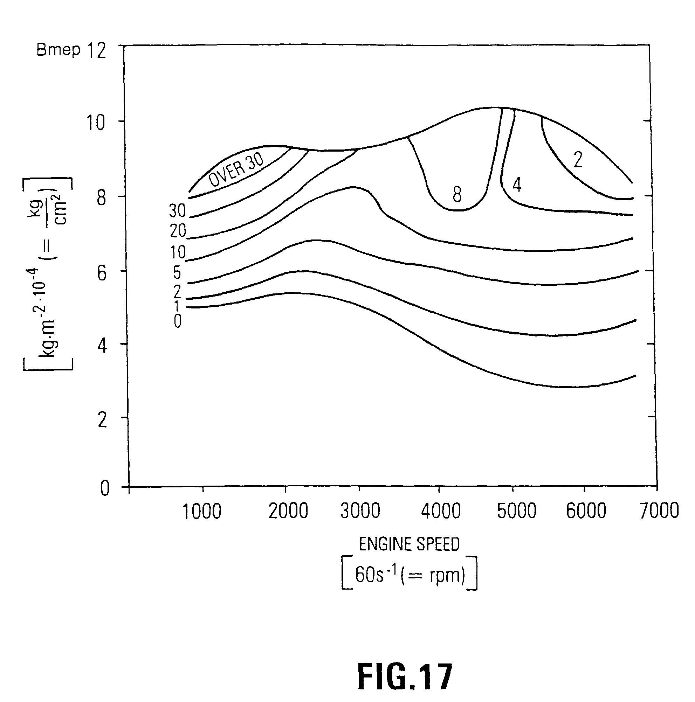

The engine speed and engine load signals are represented diagrammatically in Figure 17 as their outputs to the ECU142 are indicated. There may also be provided a vehicle speed sensor, indicated schematically at 156 in Figure 12 which outputs a signal indicative of vehicle speed to the ECU 142 As noted, the sensors as thus far described may be considered to be typical of those type of sensors which are employed for engine control.

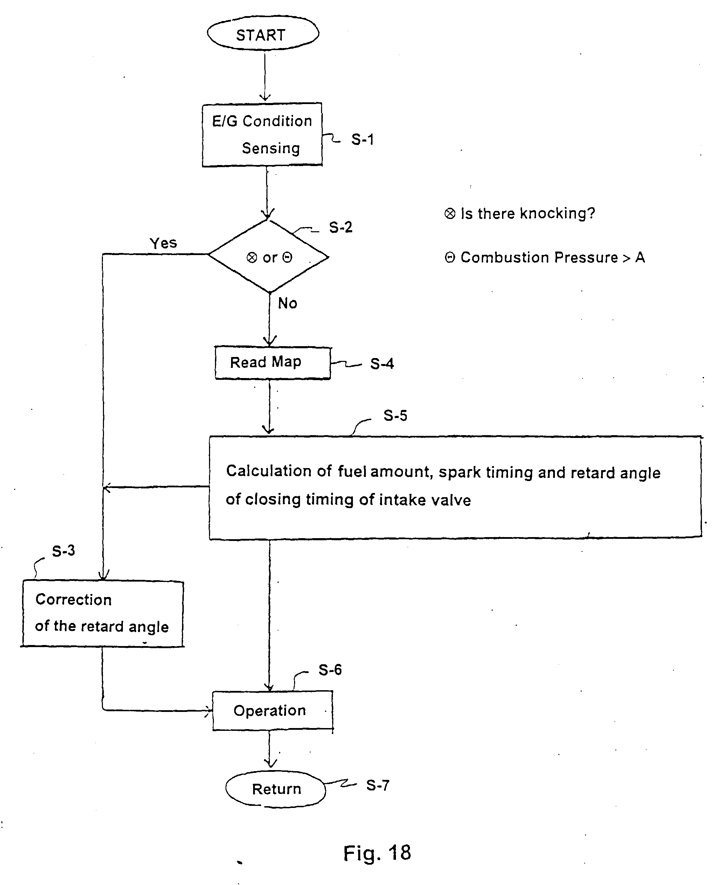

The ECU 142 is provided with a map 157 in which a plurality of intake valve timing maps are contained as shown in Figure 17 which are experimentally determined so as to obtain the desired performance. In Figure 17 the maps are related to engine speed and engine load or output in the term of BMEP. The families of curves will depend upon the various noted parameters in accordance with any control strategy such as engine speed, BMEP, atmospheric pressure, intake air temperature, engine water temperature, etc. The intake valve timing control in conjunction with these set conditions of the engine are well known and those skilled in the art can select any suitable system. However, in accordance with the embodiment an arrangement is also provided for decreasing the retarding of the opening of the intake valve and, accordingly, decreasing the amount of intake and exhaust overlap so as to reduce the likelihood of knocking so as to prevent knocking under certain running conditions, particularly high load, high speed conditions. A control routine which may be employed in conjunction with such an arrangement is shown in Figure 18 and will now be described by reference to that figure.

Once the program starts, it moves to the step S-1 so as to sense the engine and ambient running conditions by reading the outputs of the various sensors. In addition, the program then moves to the step S-2 so as to determine if there is knocking either by sensing an output from the knock sensor 149 or if there is a condition when knocking is likely to occur as by sensing the combustion chamber pressure from the sensor 151. It is determined that knocking is likely if combustion chamber pressure is greater than a predetermined pressure A. If there is knocking or the likelihood of knocking, the program moves to the step S3 so as to provide a correction in the intake valve opening by selecting an appropriate retardation angle from the pre-established information fed into the ECU142 for the other sensed conditions.

If a knocking condition is not likely to occur or if knocking is not occurring, the program moves from the step S-2 to the step S-4 so as to read from the map of Figure 17 (map157) the optimum intake valve timing as well as from other maps the amount and timing of fuel for the fuel injector146 and the timing for firing of the spark plugs 43 at the step S-5. This calculation will be corrected if knocking has been determined or if the likelihood of knocking is present at the step S-3. The program then moves to the step S-6 so as to actuate the control 141 for changing the variable valve timing device 139 and appropriately adjusting the timing of the opening of the intake valves by the intake camshaft 48. The program then repeats at the step S-7.

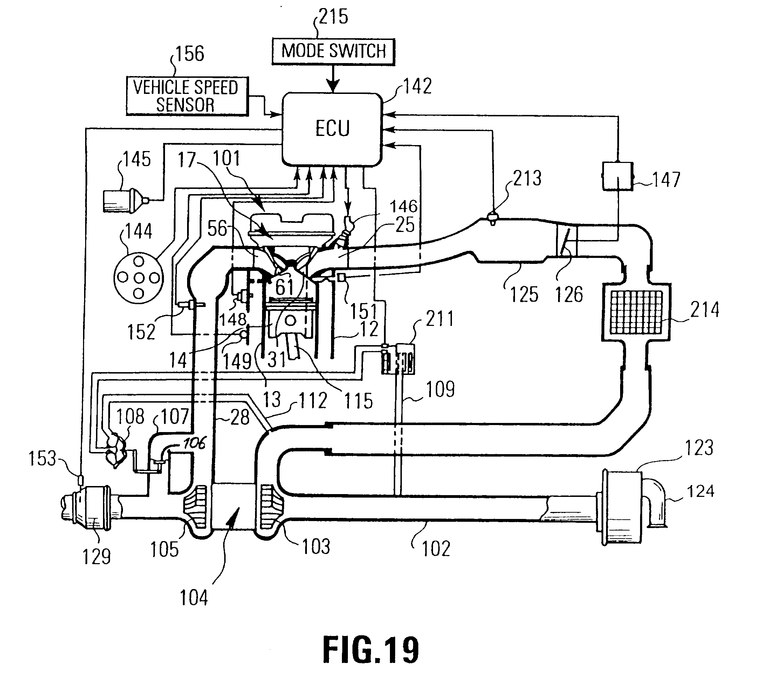

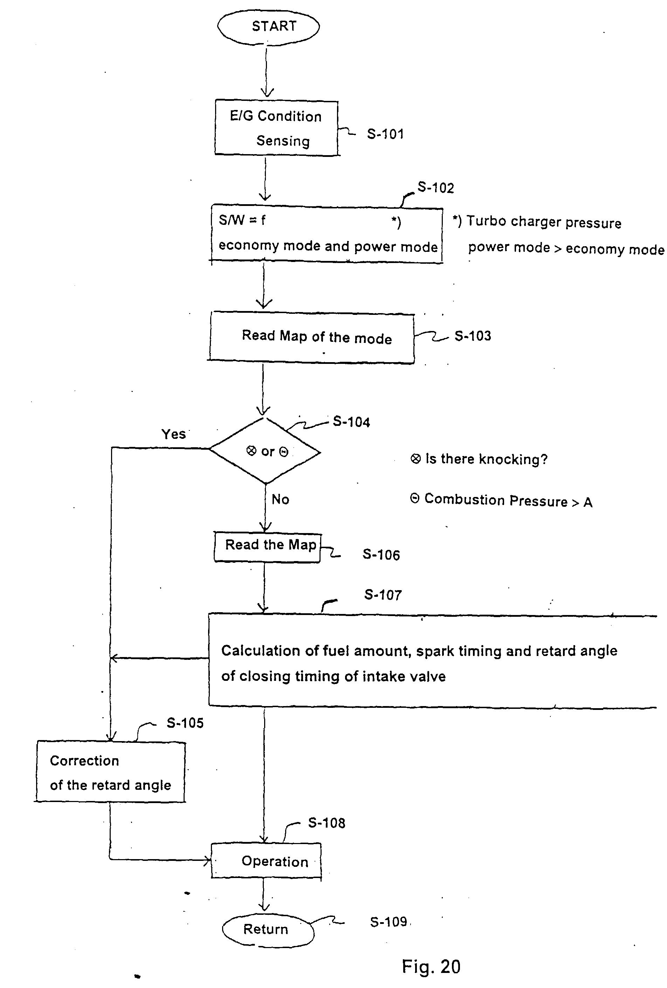

In the embodiment of the invention as thus far described, the engine 11 has been a normally aspirated engine. The invention also is capable of use in conjunction with supercharged and/or turbo charged engines and such an embodiment is shown in Figures 19 and 20 wherein the engine is identified generally by the reference numeral 101. Many of the basic components of the engine 101 and its controls are the same as those previously described and where that is the case, those components have been identified by the same reference numerals and will be described again only in detail insofar as is necessary to understand the construction and operation of this embodiment.

Referring primarily to Figure 19 in this embodiment the air inlet device 123 delivers atmospheric air through an air delivery conduit 102 to the compressor stage 103 of a turbo charger, indicated generally by the reference numeral 104. The turbo charger 104 has a turbine stage 105 that receives the exhaust gases from the engine through the exhaust manifold 28 and discharges them to the catalytic convertor129. A boost pressure control valve 106 is positioned in a bypass passage 107 that extends around the turbine 105 of the turbo charger 104 so as to limit maximum boost pressure. This is accomplished by means of a servo 108 that receives an atmospheric pressure signal from a conduit 109 in which a control valve 211 is positioned and which communicates with the air delivery conduit 102. In addition, a boost pressure passage 112 also extends to the servo 108. If the control 211 is in an opened position, boost pressure will be bleed off back to the induction system and the control valve 106 will be closed and full boost will be obtained. However, if boost pressure becomes too high and the valve 211 is closed, then the pressure in the control 108 will cause the valve 106 to open and bypass the turbine stage 105 and limit the boost, as is well known in this art.

The boost pressure is also sensed by a pressure sensor 213 positioned downstream of the throttle valve 126 and outputs the signal to the ECU 142.

An innercooler 214 of any known type is interposed in the system connecting the compressor stage 103 of the turbo charger 104 to the intake manifold 125. The innercooler 214 may be of any known type.

In accordance with a feature of the engine , the amount of boost pressure may also be varied by a mode switch, indicated generally by the reference numeral 215 and which is coupled to the ECU 142 to operate the valve 211 and limit the boost under some conditions. The mode switch 215 may be operated by the operator so as to provide either an economy mode where the boost pressure is limited and a power mode wherein the boost pressure is not limited, as will now be described by particular reference to the operational diagram of Figure 20.

As with the previously described embodiment, this routine is only one of many which may be employed and it is also to be understood that the various sensed parameters may vary depending upon the desired control routine. The control routine of Figure 20 is generally the same as that of the previously described embodiment in Figure 18 but this routine will be described in its entirety.

When the program starts it moves to the step S101 so as to read all of the sensors and sense the engine condition. The program then moves to the step S102 so as to read the condition of the mode switch 215 so as to determine if the system is operating in the economy mode or the power mode. The program then moves to the step S103 so as to read the maps of the respective modes so as to determine if the system requires correction because of knocking or combustion chamber pressure similar to the step S2 of the previous embodiment. It should be noted that the knocking condition and likelihood of knocking will depending upon whether operating in the power or economy modes.

The program then moves to the step S104 to determine if the knocking sensor 149 indicates a knocking condition or if the pressure sensor 151 has a combustion pressure which is higher than the pressure A which is indicative of an incipient knocking condition. If either condition is present, the program moves to the step S105 to make a correction in the intake valve opening so as to change its opening point appropriately to avoid the knocking.

After the step S104, the program also moves to the step S106 to read the appropriate maps and then to the step S107 to calculate the various engine control features such as the fuel injection amount, spark timing, and normal intake valve timing. The program then moves to the step S108 so as to effect the operation of all of the controls including that of the variable valve timing so as to set them as aforedescribed and then the program returns at the step S109.

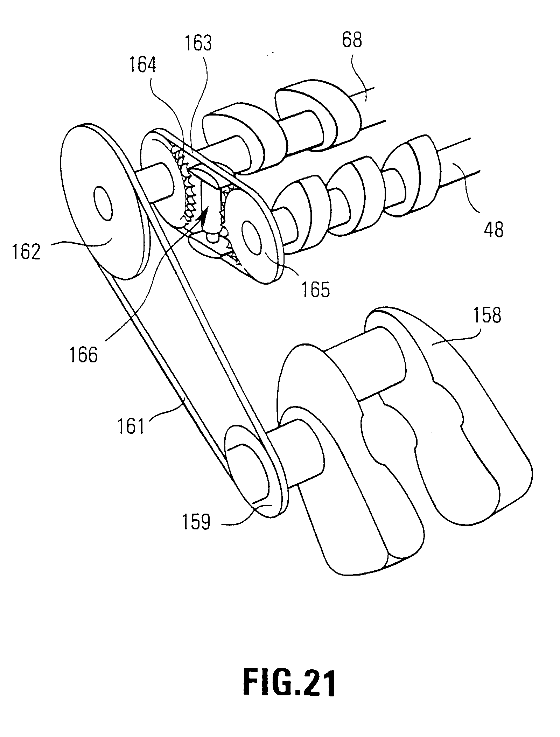

Embodiments of the invention as thus far described only the timing of the intake cam shaft 48 has been varied whereas the timing of the exhaust cam shaft has been held fixed. Of course, the invention may also be employed in conjunction with engines where both the timing of the intake and the exhaust cam shafts 48 and 68 are varied and Figure 21 shows an arrangement wherein this can be accomplished.

In these figures, the engine crank shaft is also illustrated and it is identified by the reference numeral 158 and has the sprocket 159 for driving either a chain or a toothed belt 161. In this embodiment, the exhaust cam shaft 68 is directly driven from the crank shaft 158 by means of a toothed sprocket 162 that is affixed for rotation with the exhaust cam shaft 68. The intake cam shaft 48 is, on the other hand, driven by a second timing chain 163 that is trained around a sprocket 164 affixed to the exhaust cam shaft 68 and a sprocket 165 affixed to the intake cam shaft 48. A combined tensioner timing adjusting device 166 is interposed between the sprocket 164 and 165 and is adapted to maintain not only constant tension in the chain 163, but also so as to shift the phase angle between the sprocket 164 and 165 so as to adjust the timing of the intake and exhaust cam shafts 48 and 68 relative to the crank shaft 158 as well known with this type of tensioner. The control strategy may be of any of the types previously described.

It should be readily apparent from the foregoing description that the described embodiments of the invention are very effective in providing optimum engine running characteristics under all conditions and also is capable of adjusting the valve timing so as to avoid knocking or stop knocking once it occurs. Of course, the foregoing description is only that of preferred embodiments of the invention and various changes in modification may be made without departing from the invention, as defined by the appended Claims.

## Claims

1. Internal combustion engine comprising
a cylinder block (12) having at least one cylinder bore (13),
a piston (14) accommodated in said cylinder bore (13) so as to allow reciprocating motion,
a cylinder head (17) affixed to said cylinder block (12) and enclosing said cylinder bore (13),
said piston (14) and said cylinder head (17) each having a combustion chamber surface together defining a combustion chamber, and
an intake passage arrangement (22,23,24,25,26,27,28) and an exhaust passage arrangement (55,56,57,58) having three intake valves (31,32,33) and two exhaust valves (61) for a combustion chamber,
wherein the combustion chamber surfaces of the cylinder head (17) and the piston (14) are shaped substantially concave so as to define a lens shaped combustion chamber when the piston (14) is at its top dead centre position,
wherein the combustion chamber surface of the piston (14) has a central concave area (15) defining in part said lens shaped combustion chamber and an annular flat portion adjacent to said central concave area (15),
whereby first squish areas (44,45) are formed by an outer peripheral portion of the combustion chamber surface of the cylinder head (17) between the cylinder bore surface and said intake valves (31,32,33) and partly extending between a centre intake valve (31) and the respective side intake valves (32,33),
**characterized in that**
a separate second squish area (60) is formed by a peripheral edge portion of the combustion chamber surface of the cylinder head (17) adjacent to the cylinder bore surface between said exhaust valves (61) on a cylinder side opposite to said first squish areas (44,45), and
that the piston (14) is provided with a plurality of recesses (77,78,79) formed in its combustion chamber surface,
whereby a large recess (77) opposes the head portion (34) of the center intake valve (31), a pair of two shallower recesses (78) oppose the head portions (35,36) of said adjacent side intake valves (32,33) and two even smaller recesses (79,79) oppose the head portions of said two exhaust valves (61,61) for clearing a space for said valves (31,32,33,61) and additionally balancing both squish flows from the intake side and the exhaust side.

2. Internal combustion engine according to claim 1, **characterised in that** said central concave area is formed by a recessed bowl (15) having the shape of a segment of a sphere.

3. Internal combustion engine according to claim 1 or 2, **characterised in that** said centre intake valve (31) and said two side intake valves (32, 33) are disposed substantially on a first side of a plane (A) containing the cylinder bore axis (B), while said two exhaust valves (61) are disposed on the other side of said plane (A).

4. Internal combustion engine according to claim 3, **characterised in that** the centre intake valve (31) is spaced inwardly from the surface of said cylinder bore (13).

5. Internal combustion engine according to at least one of claims 1 to 4, **characterised in that** a centre intake valve seat (22), formed in the cylinder head (17) and associated with the centre intake valve (31) is disposed at a lesser distance (a) to a spark plug (43) than side intake valve seats (23, 24) associated with the side intake valves (32, 33).

6. Internal combustion engine according to at least one of claims 1 to 5, **characterised in that** a spark plug (43) is disposed slightly offset with respect to the cylinder bore axis (B) towards the exhaust side of the cylinder head (17).

7. Internal combustion engine according to at least one of claims 1 to 6, **characterised in that** the side intake valves (32, 33) are slidably received in the cylinder head (17) along axes (B-2) that are inclined with respect to a first plane (A) containing the cylinder bore axis (B) and with respect to a second plane (C) containing the cylinder bore axis (B) and perpendicular to said first plane (A), such that said axes (B-2) intersect in said second plane at a point (E) below the bottom dead centre position of the piston (14).

8. Internal combustion engine according to at least one of claims 1 to 7, **characterised in that** the centre intake valve (31) is slidably supported in the cylinder head (17) along an axis (B-1) that is inclined with respect to the first plane (A) and lies in said second plane (C).

9. Internal combustion engine according to at least one of claims 1 to 8, **characterised in that** the intake valves (31, 32, 33) are actuated by an intake camshaft (48) rotatably supported in the cylinder head (17) and the exhaust valves (61, 61) are actuated by an exhaust camshaft (68) also rotatably supported in the cylinder head (17).

10. Internal combustion engine according to at least one of claims 1 to 9, **characterised in that** a valve timing device (139) is provided for varying the timing of the intake valves (31, 32, 33) and/or the exhaust valves (61, 61).

11. Internal combustion engine according to claim 10, **characterised in that** a control unit (141, 142) is provided for controlling the valve timing device (139) in response to engine operating conditions indicative of knocking to preclude knocking, said control unit (141, 142) being connected with sensor means (149, 151) for sensing said engine operating conditions indicative of knocking.

12. Internal combustion engine according to claim 11, **characterised in that** the sensor means includes a knock sensor (149) for sensing an actual knocking condition and/or a pressure sensor (151) for sensing a combustion chamber pressure.

13. Internal combustion engine according to at least one of claims 1 to 12, **characterised in that** the intake camshaft (48) and exhaust camshaft (68) are provided with bearing surfaces (51) disposed between cam lobes (49, 69) for operating respective valves (31, 32, 33, 61, 61), and said bearing surfaces (51) are journaled within respective bearing surfaces (52, 71) formed in the cylinder head (17).

14. Internal combustion engine according to claim 13, **characterised in that** bearing caps (53, 72) are associated with said bearing surfaces (52, 71) of the cylinder head (17) and are affixed to said cylinder head (17) by means of at least a pair of fastening bolts with one fastening bolt disposed on either side of the respective camshaft (48, 68).

15. Internal combustion engine according to at least one of claims 1 to 14, **characterised in that** the cylinder head (17) is affixed to the cylinder block (12) through a plurality of hold down bolts (75) with at least one bolt (75) being disposed on the exhaust side and the intake side of the cylinder head (17), respectively.

16. Internal combustion engine according to claim 15, **characterised in that** said at least one hold down bolt (75) on the intake side is aligned with and disposed at the same distance from the first plane (A) as the fastening bolts of the bearing caps (53) disposed outwards with respect to the intake camshaft (48).

17. Internal combustion engine according to at least one of claims 1 to 16, **characterised in that** the intake passage arrangement comprises three intake passages (25, 26, 27) associated with the side intake valves (32, 33) and the centre intake valve (31), respectively, said three intake passages (25, 26, 27) merging into a common intake port (28).

18. Internal combustion engine according to claim 17, **characterised in that** the intake passages (25, 26, 27) have an end portion each adjacent to the valve seats (22, 23, 24) which end portion extends generally parallel to the axes (B-1, B-2) of the associated intake valve (31, 32, 33).

## Patentansprüche

1. Die Erfindung betrifft eine Brennkraftmaschine mit
einem Zylinderblock (12), der mindestens eine Zylinderbohrung (13) enthält,
einem Kolben (14), der derart in der Zylinderbohrung (13) angeordnet ist, daß er eine Auf- und Abbewegung durchführen kann,
einem Zylinderkopf (17), der an dem Zylinderblock (12) befestigt ist und die Zylinderbohrung (13) abschließt,
wobei der Kolben (14) und der Zylinderkopf (17) jeweils eine Brennkammeroberfläche aufweisen, die zusammen eine Brennkammer bestimmen, und mit
einer Ansaugrohranordnung (22, 23, 24, 25, 26, 27, 28) und eine Abgaskrümmeranordnung (55, 56, 47, 58) mit drei Einlaßventilen (31, 32, 33) und zwei Auslaßventilen (61, 61) für eine Brennkammer,
wobei die Brennkammeroberflächen des Zylinderkopfes (17) und des Kolbens (14) im wesentlichen konkav ausgebildet sind, um so eine linsenförmige Brennkammer festzulegen, wenn der Kolben (14) an seiner oberen Totpunktposition ist,
wobei die Brennkammeroberfläche des Kolbens (14) einen zentralen konkaven Bereich (15) aufweist, der zum Teil die linsenförmige Brennkammer festlegt und angrenzend an den zentralen konkaven Bereich (15) einen ringförmigen flachen Abschnitt aufweist, und wobei erste Quetschwirbelzonen (44, 45) durch einen äußeren Randabschnitt der Brennkammeroberfläche des Zylinderkopfes (17) zwischen der Oberfläche der Zylinderbohrung und den Einlaßventilen (31, 32, 33) ausgebildet sind und sich teilweise zwischen einem Zentraleinlaßventil (31) und den jeweiligen Seiteneinlaßventilen (32, 33) erstrekken, **dadurch gekennzeichnet**, daß
ein getrennter zweiter Quetschwirbelbereich (60) durch einen Randkantenabschnitt der Brennkammeroberfläche des Zylinderkopfes (17) nahe der Oberfläche der Zylinderbohrung zwischen den Auslaßventilen (61, 61) auf einer Zylinderseite ausgebildet ist, die den ersten Quetschwirbelbereichen (44, 45)gegenüberliegt, und daß
der Kolben (14) mit einer Vielzahl von Aussparungen (77, 78, 79) versehen ist, die in seiner Brennkammeroberfläche ausgebildet sind, wobei eine große Aussparung (77) dem Kopfabschnitt (34) des mittleren Einlaßventils (31) gegenüberliegt, und ein Paar zweier flacherer Aussparungen (78, 78) den Kopfabschnitten (35, 36) der angrenzenden Seiteneinlaßventilen (32, 33) gegenüberliegt und zwei noch schmalere Aussparungen (79, 79) den Kopfabschnitten der zwei Auslaßventilen (61, 61) gegenüberliegt, um Raum für die Ventile (31, 32, 33, 61, 61) zu schaffen und zusätzlich die beiden Quetschwirbelströme der Einlaßseite und der Auslaßseite auszugleichen.

2. Brennkraftmaschine gemäß Anspruch 1, **dadurch gekennzeichnet**, daß der zentrale konkave Bereich durch eine napfförmige Aussparung (15) gebildet ist, die die Form eines Kugelsegmentes besitzt.

3. Brennkraftmaschine nach Anspruch 1 oder 2, **dadurch gekennzeichnet**, daß das mittlere Einlaßventil (31) und die beiden seitlichen Einlaßventile (32, 33) im wesentlichen auf einer ersten Seite einer Ebene (A), die die Achse (B) der Zylinderbohrung enthält, angeordnet sind, wobei die beiden Auslaßventile (61, 61) auf der anderen Seite dieser Ebene (A) angeordnet sind.

4. Brennkraftmaschine gemäß Anspruch 3, **dadurch gekennzeichnet**, daß das mittlere Einlaßventil (31) von der Oberfläche der Zylinderbohrung (13) nach innen hin beabstandet ist.

5. Brennkraftmaschine nach wenigstens einem der Ansprüche 1 bis 4, **dadurch gekennzeichnet**, daß ein Ventilsitz (22) des mittleren Einlaßventils, der in dem Zylinderkopf (17) ausgebildet ist und mit dem mittleren Einlaßventil (31) zusammenwirkt, in einem geringeren Abstand (a) zu einer Zündkerze (43) angeordnet ist, als die Ventilsitze (23, 24) der seitlichen Einlaßventile, die mit den seitlichen Einlaßventilen (32, 33) zusammenwirken.

6. Brennkraftmaschine nach wenigstens einem der Ansprüche 1 bis 5, **dadurch gekennzeichnet**, daß eine Zündkerze (43) im Verhältnis zu der Achse (B) der Zylinderbohrung zur Auslaßseite des Zylinderkopfes (17) leicht versetzt angeordnet ist.

7. Brennkraftmaschine nach wenigstens einem der Ansprüche 1 bis 6, **dadurch gekennzeichnet**, daß die seitlichen Einlaßventile (32, 33) gleitend in dem Zylinderkopf (17) entlang von Achsen (B-2) aufgenommen sind, wobei die Achsen gegenüber einer ersten Ebene (A), welche die Achse (B) der Zylinderbohrung enthält, geneigt sind, und auch gegenüber einer zweiten Ebene (C), die die Achse (B) der Zylinderbohrung enthält und senkrecht zu der ersten Ebene (A) steht, derart, daß die Achsen (B-2) sich in der zweiten Ebene an einem Punkt (E) schneiden, der unterhalb des unteren Totpunktes des Kolbens (14) liegt.

8. Brennkraftmaschine nach wenigstens einem der Ansprüche 1 bis 7, **dadurch gekennzeichnet**, daß das mittlere Einlaßventil (31) gleitend in dem Zylinderkopf (17) aufgenommen ist entlang einer Achse (B-1), die gegenüber der ersten Ebene (A) geneigt ist und in der zweiten Ebene (C) liegt.

9. Brennkraftmaschine nach wenigstens einem der Ansprüche 1 bis 8, **dadurch gekennzeichnet**, daß die Einlaßventile (31, 32, 33) durch eine Einlaßnockenwelle (48) betätigt werden, die drehbar in dem Zylinderkopf (17) gelagert ist, und daß die Auslaßventile (61, 61) durch eine Auslaßkurbelwelle (68) betätigt werden, die ebenso drehbar in dem Zylinderkopf (17) gelagert ist.

10. Brennkraftmaschine nach wenigstens einem der Ansprüche 1 bis 9, **dadurch gekennzeichnet**, daß eine Ventilsteuervorrichtung (139) vorgesehen ist zum Variieren der Steuerzeiten der Einlaßventile (31, 32, 33) und/ oder der Auslaßventile (61, 61).

11. Brennkraftmaschine nach Anspruch 10, **dadurch gekennzeichnet**, daß eine Steuereinheit (141, 142) für die Steuerung der Ventilsteuervorrichtung (139) in Abhängigkeit der Motorbetriebsbedingungen, die auf ein Klopfen hindeuten, vorgesehen ist, um ein Klopfen auszuschließen, wobei die Steuereinheit (141, 142) mit Sensoreinheiten (149, 151) zum Aufspüren der Motorbetriebsbedingungen, die auf ein Klopfen hindeuten, verbunden ist.

12. Brennkraftmaschine nach Anspruch 11, **dadurch gekennzeichnet**, daß die Sensoreinrichtungen einen Klopfsensor (149) für das Aufspüren eines Zustandes gegenwärtigen Klopfens umfaßt, und/ oder einen Drucksensor (151) für das Erfassen eines Brennkammerdruckes.

13. Brennkraftmaschine nach wenigstens einem der Ansprüche 1 bis 12, **dadurch gekennzeichnet**, daß die Einlaßnockenwelle (48) und die Auslaßnockenwelle (68) mit Lageroberflächen (51) versehen ist, die zwischen den Nocken (49, 69), die dem Betätigen der jeweiligen Ventile (31, 32, 33, 61, 61) dienen, angeordnet sind, und wobei die Lageroberflächen (51) in jeweiligen Lagerflächen (52, 71) gelagert sind, welche in dem Zylinderkopf (17) ausgebildet sind.

14. Brennkraftmaschine nach Anspruch 13, **dadurch gekennzeichnet**, daß Lagerkappen (53, 72) den Lagerflächen (52, 71) des Zylinderkopfes (17) zugeordnet sind und mit dem Zylinderkopf (17) mittels zumindest einem Paar von Befestigungsbolzen befestigt sind, wobei ein Befestigungsbolzen auf jeder Seite der jeweiligen Nockenwelle (48, 68) angeordnet ist.

15. Brennkraftmaschine nach wenigstens einem der Ansprüche 1 bis 14, **dadurch gekennzeichnet**, daß der Zylinderkopf (17) an dem Zylinderblock (12) durch eine Vielzahl von Niederhaltebolzen (75) befestigt ist, wobei zumindest jeweils ein Bolzen (75) auf der Auslaßseite und auf der Einlaßseite des Zylinderkopfes (17) angeordnet ist.

16. Brennkraftmaschine nach Anspruch 15, **dadurch gekennzeichnet**, daß zumindest ein Niederhaltebolzen (75) auf der Einlaßseite mit den Befestigungsbolzen der Lagerkappen (53), die relativ zur Einlaßnockenwelle (58) zur Außenseite hin angeordnet sind, ausgerichtet und in demselben Abstand zur ersten Ebene (A) angeordnet ist.

17. Brennkraftmaschine nach wenigstens einem der Ansprüche 1 bis 16, **dadurch gekennzeichnet**, daß die Einlaßkanalanordnung drei Einlaßkanäle (25, 26, 27) umfaßt, die den seitlichen Einlaßventilen (32, 33) und dem mittleren Einlaßventil (31) jeweils zugeordnet sind, wobei die drei Einlaßkanäle (25, 26, 27) nur in einen gemeinsamen Einlaßkanal (25) münden.

18. Brennkraftmaschine nach Anspruch 17, **dadurch gekennzeichnet**, daß die Einlaßkanäle (25, 26, 27) jeweils benachbart zu den Ventilsitzen (22, 23, 24) jeweils einen Endabschnitt aufweisen, wobei sich der Endabschnitt im allgemeinen parallel zu den Achsen (B-1, B-2) der zugeordneten Einlaßventile (31, 32, 33) erstreckt.

## Revendications

1. Moteur à combustion interne comprenant :
un bloc-cylindre (12) ayant au moins un alésage de cylindre (13),
un piston (14) logé dans ledit alésage de cylindre (13) pour permettre un mouvement alternatif,
une culasse (17) fixée audit bloc-cylindre (12) et enclosant ledit alésage de cylindre (13),
ledit piston (14) et ladite culasse (17) ayant chacun une surface de chambre de combustion définissant conjointement une chambre de combustion, et
un agencement de passage d'admission (22, 23, 24, 25, 26, 27, 28) et un agencement de passage d'échappement (55, 56, 57, 58) ayant trois soupapes d'admission (31, 32, 33) et deux soupapes d'échappement (61) pour une chambre de combustion,
dans laquelle les surfaces de chambre de combustion de la culasse (17) et du piston (14) sont configurées de façon sensiblement concave de manière à définir une chambre de combustion lenticulaire lorsque le piston (14) est placé à son point mort haut,
tandis que la surface de chambre de combustion du piston (14) a une zone centrale concave (15) définissant en partie ladite chambre de combustion lenticulaire et une partie plate annulaire adjacente à ladite zone concave centrale (15),
de manière que des premières zones de tourbillonnement par écrasement (44,45) soient formées par une partie périphérique extérieure de la surface de la chambre de combustion de la culasse (17) entre la surface d'alésage de cylindre et lesdites soupapes d'admission (31,32,33) et s'étendant partiellement entre une soupape d'admission centrale (31) et les soupapes d'admission latérales (32,33) respectives,
caractérisé en ce qu'
une deuxième zone de tourbillonnement par écrasement (60) séparée est formée par une partie de bord périphérique de la surface de chambre de combustion de la culasse (17), adjacente à la surface d'alésage de cylindre entre lesdites soupapes d'échappement (61) sur un côté de cylindre opposé auxdites premières zones de tourbillonnement par écrasement (44,45), et
en ce que le piston (14) est doté d'une pluralité de cavités (77,78,79) formées dans sa surface de chambre de combustion,
de manière qu'une grande cavité (77) soit placée en regard de la partie de tête (34) de la soupape d'admission centrale (31), qu'une paire de cavités (78) plus superficielles soit placée en regard des parties de tête (35,36) desdites soupapes d'admission latérales (32,33) adjacentes, et que deux cavités (79,79) encore plus petites soient placées en regard des parties de tête desdites deux soupapes d'échappement (61,61), dans le but de dégager un espace pour lesdites soupapes (31,32,33,61) et équilibrer en plus les deux flux tourbillonnaires par écrasement, venant du côté admission et du côté échappement.

2. Moteur à combustion interne selon la revendication 1, caractérisé en ce que ladite zone concave centrale est formée par une boule creusée (15) ayant la forme d'un segment de sphère.

3. Moteur à combustion interne selon la revendication 1 ou 2, caractérisé en ce que ladite soupape d'admission centrale (31) et lesdites deux soupapes d'admission latérales (32,33) sont disposées sensiblement sur un premier côté d'un plan (A) contenant l'axe d'alésage de cylindre (B), tandis que lesdites deux soupapes d'échappement (61) sont disposées sur l'autre côté dudit plan (A).

4. Moteur à combustion interne selon la revendication 3, caractérisé en ce que la soupape d'admission centrale (31) est espacée vers l'intérieur par rapport à la surface dudit alésage de cylindre (13).

5. Moteur à combustion interne selon au moins l'une des revendications 1 à 4, caractérisé en ce qu'un siège de soupape d'admission centrale (22), formé dans la culasse (17) et associé à la soupape d'admission centrale (31), est disposé à une distance (a) inférieure, vis-à-vis d'une bougie d'allumage (43), que les sièges de soupapes d'admission latérales (23,24) associés auxdites soupapes d'admission latérales (32,33).

6. Moteur à combustion interne selon au moins l'une des revendications 1 à 5, caractérisé en ce qu'une bougie d'allumage (43) est disposée légèrement en décalage par rapport audit axe d'alésage de cylindre (B) en direction du côté échappement de la culasse (17).

7. Moteur à combustion interne selon au moins l'une des revendications 1 à 6, caractérisé en ce que les soupapes d'admission latérales (32,33) sont logées de façon coulissante dans la culasse (17) selon des axes (B-2) qui sont inclinés par rapport à un premier plan (A) contenant l'axe (B) d'alésage de cylindre et par rapport à un deuxième plan (C) contenant l'axe (B) d'alésage de cylindre et perpendiculaires audit premier plan (A), de manière que lesdits axes (B-2) se coupent dans ledit plan en un point (E) situé au-dessous de la position de point mort bas du piston (14).

8. Moteur à combustion interne selon au moins l'une des revendications 1 à 7, caractérisé en ce que la soupape d'admission centrale (31) est supportée de façon coulissante dans la culasse (17), selon un axe (B-1) incliné par rapport au premier plan (A) et situé dans ledit deuxième plan (C).

9. Moteur à combustion interne selon au moins l'une des revendications 1 à 8, caractérisé en ce que les soupapes d'admission (31,32,33) sont actionnées par un arbre à cames d'admission (48) supporté en rotation dans la culasse (17) et les soupapes d'échappement (61,61) sont actionnées par un arbre à cames d'échappement (68) supporté également à rotation dans la culasse (17).

10. Moteur à combustion interne selon au moins l'une des revendications 1 à 9, caractérisé en ce qu'un dispositif de cadencement de soupape (139) est prévu pour modifier le cadencement des soupapes d'admission (31,32,33) et/ou des soupapes d'échappement (61,61).

11. Moteur à combustion interne selon la revendication 10, caractérisé en ce qu'une unité de commande (141,142) est prévue pour commander le dispositif de cadencement de soupape (139) en réponse aux conditions de fonctionnement du moteur, indicatives d'un cognement dans le but d'empêcher le cognement, ladite unité de commande (141,142) étant connectée à des moyens de capteur (149,151) pour appréhender lesdites conditions de fonctionnement du moteur indicatives du cognement.

12. Moteur à combustion interne selon la revendication 11, caractérisé en ce que les moyens de capteur comprennent un capteur de cognement (149) destiné à appréhender une condition de cognement réelle et/ou un capteur de pression (151) pour appréhender une pression en chambre de combustion.

13. Moteur à combustion interne selon au moins l'une des revendications 1 à 12, caractérisé en ce que l'arbre à cames d'admission (48) et l'arbre à cames d'échappement (68) sont dotés de surfaces de palier (51), disposées entre des lobes de cames (49,69), pour actionner des soupapes (31, 32, 33, 61, 61) respectives, et lesdites surfaces de palier (51) tourillonnant dans des surfaces de palier (52,71) respectives, formées dans la culasse (17).

14. Moteur à combustion interne selon la revendication 13, caractérisé en ce que des capuchons de palier (53,72) sont associés auxdites surfaces de palier (52,71) de la culasse (17) et sont fixés à ladite culasse (17) au moyen d'au moins une paire de boulons de fixation, un boulon de fixation étant disposé de chaque côté de l'arbre à cames (48,68) respectif.

15. Moteur à combustion interne selon au moins l'une des revendications 1 à 14, caractérisé en ce que la culasse (17) est fixée au bloc-cylindre (12) par une pluralité de boulons de maintien abaissé (75), au moins un boulon (75) étant disposé du côté échappement et du côté admission de la culasse (17), respectivement.

16. Moteur à combustion interne selon la revendication 15, caractérisé en ce que ledit au moins un boulon de maintien abaissé (75) situé du côté admission est aligné avec les boulons de fixation des capuchons de palier (53) disposés à l'extérieur par rapport à l'arbre à came d'admission (48), et disposé à la même distance du premier plan (A).

17. Moteur à combustion interne selon au moins l'une des revendications 1 à 16, caractérisé en ce que l'agencement de passage d'admission comprend trois passages d'admission (25,26,27) qui sont associés aux soupapes d'admission latérales (32,33) et à la soupape d'admission centrale (31), respectivement, lesdits trois passages d'admission (25,26,27) fusionnant en un orifice d'admission (28) commun.

18. Moteur à combustion interne selon la revendication 17, caractérisé en ce que les passages d'admission (25,26,27) ont une partie d'extrémité chaque fois adjacente aux sièges de soupape (22,23,24), la partie d'extrémité s'étendant globalement parallèlement aux axes (B-1, B-2) de la soupape d'admission (31,32,33) associée.
